(19)

Europäisches
Patentamt
European
Patent Office
Office européen
des brevets

(11) **EP 4 621 906 A1**

(12) **EUROPEAN PATENT APPLICATION**
published in accordance with Art. 153(4) EPC

(43) Date of publication:
**24.09.2025 Bulletin 2025/39**

(21) Application number: **23937834.2**

(22) Date of filing: **19.05.2023**

(51) International Patent Classification (IPC):
$H01M\ 10/0565^{(2010.01)}$    $H01M\ 10/0525^{(2010.01)}$
$H01M\ 10/058^{(2010.01)}$    $H01M\ 4/62^{(2006.01)}$
$H01M\ 4/36^{(2006.01)}$

(52) Cooperative Patent Classification (CPC):
Y02E 60/10

(86) International application number:
**PCT/CN2023/095339**

(87) International publication number:
**WO 2024/239155 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **LIU, Rundie
Ningde, Fujian 352100 (CN)**
• **CHEN, Xingbu
Ningde, Fujian 352100 (CN)**

• **WU, Lili
Ningde, Fujian 352100 (CN)**
• **SUN, Xin
Ningde, Fujian 352100 (CN)**
• **SONG, Peidong
Ningde, Fujian 352100 (CN)**
• **LI, Xuan
Ningde, Fujian 352100 (CN)**
• **DONG, Miaomiao
Ningde, Fujian 352100 (CN)**

(74) Representative: **Thoma, Michael
Lorenz Seidler Gossel
Rechtsanwälte Patentanwälte
Partnerschaft mbB
Widenmayerstraße 23
80538 München (DE)**

(54) **BATTERY CELL AND PREPARATION METHOD THEREFOR, BATTERY AND ELECTRIC
APPARATUS**

(57)    The present application relates to the technical field of batteries, and provides a battery cell and a preparation method therefor, a battery and an electrical apparatus. The battery cell comprises a negative electrode plate and an electrolyte, and the electrolyte comprises a solid electrolyte and a liquid electrolyte. The ratio of the thickness of the fully charged negative electrode plate to the thickness of the uncharged negative electrode plate is x, and the ratio of the mass of the solid electrolyte in the electrolyte to the mass of the electrolyte is y. When $x \leq 20\%$, $0 < y \leq 50\%$. When $20\% < x < 80\%$, $50\% < y < 90\%$. when $x \geq 80\%$, $90\% \leq y \leq 96\%$. By means of the cooperation of the liquid electrolyte with the solid electrolyte in the battery cell of the present application and the definition of the ratio of the mass of the solid electrolyte to the mass of the electrolyte in the battery cell comprising the negative electrode plate having a varying volume expansion ratio, not only can squeezing-induced leakage of the liquid electrolyte be reduced or avoided, but the electrolyte can also provide a better lithium ion transmission rate, so that the battery cell can balance the cycling performance and capacity performance.

**(Cont. next page)**

EP 4 621 906 A1

20

21

23

22

**FIG. 3**

**Description**

## TECHNICAL FIELD

The present application relates to the technical field of batteries, and in particular, to a battery cell and a preparation method therefor, a battery, and an electrical apparatus.

## BACKGROUND

With the development of lithium batteries, the industry and the market have higher demands for energy density. Silicon and lithium metal have ultra-high theoretical gram capacities as anode materials; however, the volume expansion ratio problems of silicon and lithium metal pose great challenges to the application thereof. Batteries with silicon and lithium metal as anode materials have showed that the anode continuously expands and contracts during cycling, which results in aggravation of squeezing-induced leakage of liquid electrolytes and incapability to flow back, causing the cycling performance of the battery to plummet.

## SUMMARY OF THE INVENTION

In view of the above problems, the present application provides a battery cell and a preparation method therefor, a battery, and an electrical apparatus, so that the battery can have cycling performance and capacity performance.

A first aspect of the present application provides a battery cell, comprising a negative electrode plate and an electrolyte, wherein the electrolyte comprises a solid electrolyte and a liquid electrolyte. The ratio of the thickness of the fully charged negative electrode plate to the thickness of the uncharged negative electrode plate is x, and the ratio of the mass of the solid electrolyte in the electrolyte to the mass of the electrolyte is y. When $x \leq 20\%$, $0 < y \leq 50\%$. When $20\% < x < 80\%$, $50\% < y < 90\%$. When $x \geq 80\%$, $90\% \leq y \leq 96\%$.

In the technical solutions of embodiments of the present application, by means of the cooperation of the liquid electrolyte with the solid electrolyte in the battery cell of the present application and the definition of the ratio of the mass of the solid electrolyte to the mass of the electrolyte in the battery cell comprising the negative electrode plate having a varying volume expansion ratio, not only can squeezing-induced leakage of the liquid electrolyte be reduced or avoided, but the electrolyte can also provide a better lithium ion transmission rate, so that the battery cell can balance the cycling performance and capacity performance.

In some embodiments, when $x \leq 20\%$, $0 < y \leq 10\%$. When $20\% < x < 80\%$, $70\% \leq y < 90\%$. When $x \geq 80\%$, $90\% \leq y \leq 93\%$. When $x \leq 20\%$, the volume expansion ratio of the negative electrode plate is relatively low, and $0 < y \leq 10\%$ enables the battery cell to obtain both a higher number of cycles and a larger battery capacity; when $20\% < x < 80\%$ and $70\% \leq y < 90\%$, the volume expansion ratio of the negative electrode plate is moderate, and $70\% \leq y < 90\%$ enables the battery cell to balance the number of cycles and the battery capacity; and when $x \geq 80\%$, the volume expansion ratio of the negative electrode plate is relatively large, and $90\% \leq y \leq 93\%$ enables the battery cell to achieve a higher number of cycles while the battery capacity is maintained.

In some embodiments, the solid electrolyte is a heat-curable electrolyte solution. The heat-curable electrolyte can be cured under heating conditions to form a solid electrolyte.

In some embodiments, the curing temperature of the heat-curable electrolyte is 50-110°C. The curing temperature of the heat-curable electrolyte is relatively low and within a safe operating temperature range of the battery cell.

In some embodiments, the liquid electrolyte comprises a lithium salt and/or a sodium salt, and the lithium salt comprises any one or more of LiPF6, LiClO4, LiTFSI, LiFSI, LiBOB, LiDFOB, and LiNO3.

A second aspect of the present application provides a method for preparing the battery cell of the above embodiments. The preparation method comprises preparing an electrode assembly; and placing the electrode assembly into a case, injecting a raw material for forming the solid electrolyte into the case, curing the raw material of the solid electrolyte to form the solid electrolyte, further injecting the liquid electrolyte into the case containing the electrode assembly, and sealing the case.

In the technical solutions of the embodiments of the present application, by firstly injecting the raw material for forming the solid electrolyte into the case containing the electrode assembly, curing the raw material of the solid electrolyte to form a solid electrolyte, and then injecting the liquid electrolyte into the case containing the electrode assembly, the method for preparing the battery cell according to the present application can obtain a mixed electrolyte comprising the solid electrolyte and the liquid electrolyte, that is, the mixing of the solid electrolyte and the liquid electrolyte is achieved by only two liquid injections, which simplifies the preparation process of the battery cell and reduces the process cost of the battery cell.

In some embodiments, the solid electrolyte is a heat-curable electrolyte, and after the raw material of the heat-curable electrolyte is injected into the case containing the electrode assembly, the raw material of the heat-curable electrolyte is reacted at 50-110°C for 3-24 h to form the solid electrolyte. The curing process of the heat-curable electrolyte of the present application is simple and convenient and can form a stable solid electrolyte.

In some embodiments, the raw material of the heat-curable electrolyte comprises the liquid electrolyte, a polymerizable monomer, and an initiator. Under heating conditions, the polymerizable monomer can be polymerized under the action of the initiator to form a polymer, and the polymer absorbs part of the liquid electrolyte to form a solid electrolyte.

In some embodiments, the mass fraction of the polymerizable monomer in the raw material is 0.5-6.5 wt%. When the mass fraction of the polymerizable monomer in the raw material is 0.5-6.5 wt%, the polymerizable monomer can be polymerized under the action of the initiator to form a polymer, and the polymer absorbs part of the liquid electrolyte to form the solid electrolyte, thereby obtaining the electrolyte composed of the liquid electrolyte and the solid electrolyte.

In some embodiments, the mass fraction of the initiator in the raw material is 0.1-0.5 wt%. When the mass fraction of the initiator in the raw material is 0.1-0.5 wt%, the polymerizable monomer can be polymerized under the action of the initiator to form a polymer, and the polymer absorbs part of the liquid electrolyte to form the solid electrolyte, thereby obtaining the electrolyte composed of the liquid electrolyte and the solid electrolyte.

In some embodiments, the polymerizable monomer has an unsaturated double bond. The polymerizable monomer having the unsaturated double bond can be polymerized under the action of the initiator to form a polymer, and the polymer absorbs part of the liquid electrolyte to form a solid electrolyte.

In some embodiments, the polymerizable monomer comprises any one or more of an ester monomer, a carbonate monomer, a sulfone monomer, an isocyanate monomer, an amide monomer, a nitrile monomer, and a fluorinated monomer. The above polymerizable monomer can be polymerized under the action of the initiator to form a polymer, and the polymer absorbs part of the liquid electrolyte to form the solid electrolyte.

In some embodiments, the initiator comprises any one or more of azobisisobutyronitrile, azobisisovaleronitrile, azobisisoheptanenitrile, azoisobutylcyanoformamide, azobiscyclohexylcarbonitrile, dimethyl azobisisobutyrate, azobisisobutyramidine hydrochloride, azobisisopropylimidazoline hydrochloride, and azobiscyanovaleric acid. The above initiator can initiate the polymerization of the polymerizable monomer to form a polymer, and the polymer absorbs part of the liquid electrolyte to form the solid electrolyte.

A third aspect of the present application provides a battery, comprising the battery cell in the above embodiments.

A fourth aspect of the present application provides an electrical apparatus, comprising the battery cell or battery in the above embodiments, wherein the battery cell or battery is used for providing electrical energy.

The foregoing description is merely an overview of the technical solution of the present application. In order to enable a clearer understanding of the technical solutions of the present application so that the present application can be implemented according to the content of the specification and to make the foregoing and other objectives, features, and advantages of the present application more evident and comprehensible, specific embodiments of the present application are provided hereby below.

**BRIEF DESCRIPTION OF DRAWINGS**

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:

FIG. 1 is a schematic structural diagram of a vehicle according to some embodiments of the present application;
FIG. 2 is an exploded schematic structural diagram of a battery according to some embodiments of the present application; and
FIG. 3 is an exploded schematic structural diagram of a battery cell according to some embodiments of the present application.

Reference numerals in the DETAILED DESCRIPTION are as follows:

1000 - vehicle, 100 - battery, 200 - controller, 300 - motor,
10 - box, 11 - first part, 12 - second part,
20 - battery cell, 21 - end cover, 22 - case, and 23 - electrode assembly.

**DETAILED DESCRIPTION**

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding.

With the development of lithium batteries, the industry and the market have higher demands for energy density. Silicon and lithium metal have ultra-high theoretical gram capacities as anode materials; however, the volume expansion ratio problems of silicon and lithium metal pose great challenges to the application thereof. Batteries with silicon and lithium metal as anode materials have showed that the anode continuously expands and contracts during cycling, which results in aggravation of squeezing-induced leakage of liquid electrolytes and incapability to flow back, causing the cycling performance of the battery to plummet.

The thermodynamic and electrochemical stability and mechanical strength of solid electrolytes are generally better than those of liquid electrolytes. The solid electrolytes also have more stable ion conduction and more stable ion deposition, allowing lithium-ion batteries to cycle more stably. The solid electrolytes also have a liquid-locking effect, which can prevent squeezing-induced leakage of liquid electrolytes in high-expansion systems. The liquid electrolytes have high ionic conductivity and good reflow and wetting effects in batteries but suffer from low poor safety.

Based on the above considerations, in order to improve the performance of the battery cell, the present application comprehensively utilizes the advantages of both solid and liquid electrolytes. By means of the cooperation of the liquid electrolyte with the solid electrolyte in the battery cell of the present application and the definition of the ratio of the mass of the solid electrolyte to the mass of the electrolyte in the battery cell comprising the negative electrode plate having a varying volume expansion ratio, not only can squeezing-induced leakage of the liquid electrolyte be reduced or avoided, but the electrolyte can also provide a better lithium ion transmission rate, so that the battery cell can balance the cycling performance and capacity performance.

The battery mentioned in the embodiments of the present application refers to a single physical module including a plurality of battery cells to provide higher voltage and capacity. The battery generally comprises a box for encapsulating one or more battery cells. The box can prevent liquid or other foreign matters from affecting the charging or discharging of the battery cell.

Each battery cell is a secondary battery, and it may be, without limitation, either a lithium-ion battery or a lithium-sulfur battery. The battery cell may be cylindrical, flat, cuboid, or in other shapes. Depending on the way of encapsulation, the battery cells are generally classified into three types: cylindrical battery cells, rectangular battery cells, and pouch battery cells.

The battery cell comprises an electrode assembly and an electrolyte, and the electrode assembly is composed of a positive electrode plate, a negative electrode plate, and a separator. The battery cell works mainly by relying on the movement of metal ions between the positive electrode plate and the negative electrode plate. The positive electrode plate comprises a positive electrode current collector and a positive electrode active material layer. The positive electrode active material layer coats the surface of the positive electrode current collector. The portion of the positive electrode current collector that is not coated with the positive electrode active material layer protrudes from the portion of the positive electrode current collector that is coated with the positive electrode active material layer, and the portion of the positive electrode current collector that is not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate comprises a negative electrode current collector and a negative electrode active material layer. The negative electrode active material layer coats the surface of the negative electrode current collector. The portion of the negative electrode current collector that is not coated with the negative electrode active material layer protrudes from the portion of the negative electrode current collector that is coated with the negative electrode active material layer, and the portion of the negative electrode current collector that is not coated with the negative electrode active material layer serves as a negative tab. The material of the negative electrode current collector may be copper. In order to ensure that no fusing occurs when a large current passes, there are a plurality of positive tabs which are stacked together, and there are a plurality of negative tabs which are stacked together. The material of the separator may be polypropylene (PP), or polyethylene (PE), etc. In addition, the electrode assembly may have either a wound structure or a stacked structure, and the embodiments of the present application are not limited thereto.

The battery cell further comprises a current collecting member, which is used for electrically connecting the tabs of the battery cell to electrode terminals to transmit electrical energy from the electrode assembly to the electrode terminals and then to the outside of the battery cell through the electrode terminals; a plurality of battery cells are electrically connected by means of a busbar component, so as to realize connection of the battery cells in series, parallel, or series-parallel.

The battery further comprises a sampling terminal and a battery management system. The sampling terminal is connected to the busbar component and used for collecting information of the battery cell, such as voltage or temperature. The sampling terminal transmits the collected information of the battery cell to the battery management system. When detecting that the information of the battery cell exceeds a normal range, the battery management system limits the output power of the battery to achieve safety protection.

Understandably, the electrical apparatus suitable for use with a battery as described in the embodiments of the present application may be in various forms, such as a mobile phone, a portable device, a laptop, storage battery car, an electric vehicle, a ship, a spacecraft, an electronic toy, or an electric tool. For example, the spacecraft includes an airplane, a rocket, a space shuttle, a spaceship, etc.; the electronic toy includes a fixed or mobile electronic toy, such as a game console, an electric vehicle toy, an electric ship toy, or an electric aircraft toy; and the electric tool includes a metal-cutting power tool, a grinding power tool, an assembly power tool, and a railway power tool, such as an electric drill, an electric grinder, an electric wrench, an electric screwdriver, an electric hammer, an electric impact drill, a concrete vibrator, and an electric planer.

The battery cell and battery described in the embodiments of the present application are not only applicable to the above-described electrical apparatuses, but can also be applicable to all electrical apparatuses using battery cells and batteries. However, for the sake of simplicity of description, the following embodiments are all illustrated by taking an electric vehicle as an example.

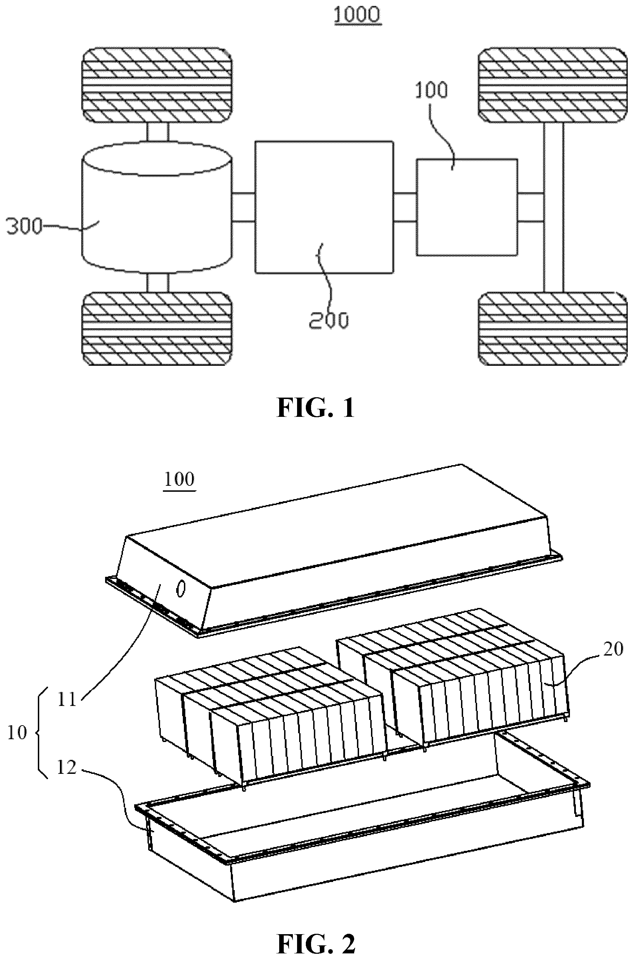

Referring to FIG. 1, FIG. 1 is a schematic structural diagram of a vehicle according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, etc. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further comprise a controller 200 and a motor 300. The controller 200 is used for controlling the battery 100 to supply power to the motor 300, for example, for the operating power demand when starting, navigating, and driving the vehicle 1000.

In some embodiments of the present application, the battery 100 can be used not only as the operating power source of the vehicle 1000, but also as a driving power source of the vehicle 1000 to replace or partially replace fuel or natural gas to provide driving power for the vehicle 1000.

Referring to FIG. 2, FIG. 2 is an exploded diagram of the battery according to some embodiments of the present application. The battery 100 comprises a box 10 and a battery cell 20, wherein the battery cell 20 is accommodated in the box 10. The box 10 is used for providing an accommodating space for the battery cell 20, and various structures may be used for the box 10 can. In some embodiments, the box 10 may comprise a first part 11 and a second part 12, wherein the first part 11 and the second part 12 cover each other, and the first part 11 and the second part 12 together define the accommodating space for accommodating the battery cell 20. The second part 12 may be a hollow structure with an opening at one end, and the first part 11 may be a plate-like structure, where the first part 11 covers the opening side of the second part 12 so that the first part 11 and the second part 12 together define the accommodating space. The first part 11 and the second part 12 may each be a hollow structure with an opening at one end, where the opening side of the first part 11 covers the opening side of the second part 12. Of course, the box 10 formed from the first part 11 and the second part 12 may have various shapes, such as a cylinder and a rectangular solid.

In the battery 100, there may be a plurality of battery cells 20, and the plurality of battery cells 20 may be connected in series, or in parallel, or in parallel-series, wherein being connected in parallel-series means that the plurality of battery cells 20 are connected in both series and parallel. The plurality of battery cells 20 may be directly connected together in series, or in parallel, or in parallel-series, and then the entirety composed of the plurality of battery cells 20 may be accommodated in the box 10. Of course, the battery 100 may also be the plurality of battery cells 20 formed initially into the form of battery modules by connection in series, or in parallel, or in parallel-series, and the plurality of battery modules are then connected in series, or in parallel, or in parallel-series to form an entirety and accommodated in the box 10. The battery 100 may further comprise other structures, for example, the battery 100 may further comprise a busbar component for achieving electrical connection between the plurality of battery cells 20.

Each battery cell 20 may be a secondary battery; or it may be, without limitation, either a lithium-ion battery or a lithium-sulfur battery, a sodium-ion battery, or a magnesium-ion battery. The battery cell 20 may be cylindrical, flat, cuboid, or in other shapes.

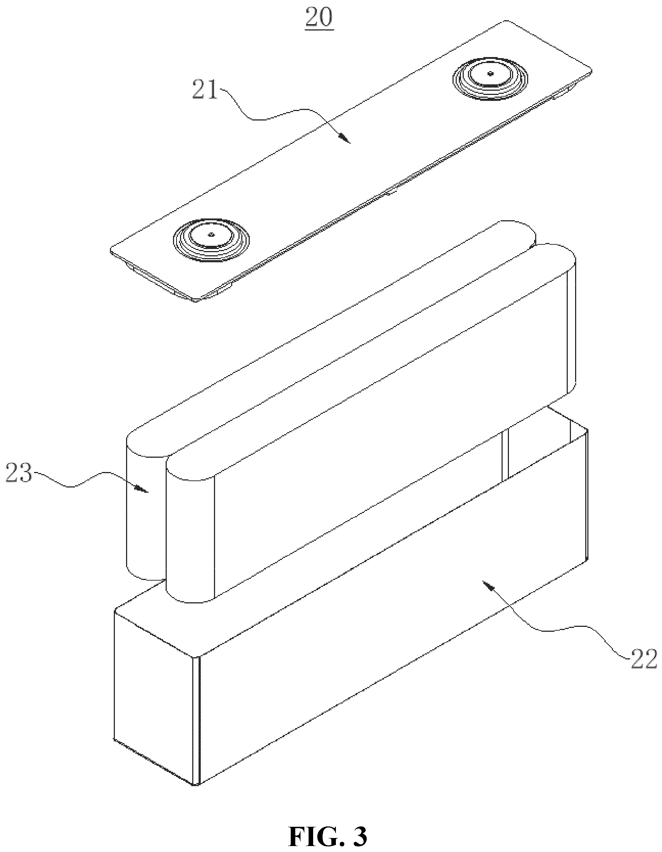

Referring to FIG. 3, FIG. 3 is an exploded schematic structural diagram of a first battery cell provided by some embodiments of the present application. The battery cell 20 refers to a minimum unit that makes up a battery. As shown in FIG. 3, the battery cell 20 comprises an end cover 21, a case 22, an electrode assembly 23, and other functional components.

The end cover 21 refers to a component that covers an opening of the case 22 to isolate an internal environment of the battery cell 20 from an external environment. Without limitation, the shape of the end cover 21 may match the shape of the case 22 so as to fit the case 22. Optionally, the end cover 21 may be made of a material (such as an aluminum alloy) with a certain hardness and strength, so that the end cover 21 is less likely to deform when being pressed and collided, the battery cell 20 can have a higher structural strength, and the safety performance can also be improved. A functional component such as the electrode terminal may be arranged on the end cover 21. The electrode terminal may be used for electrically connecting to the electrode assembly 23, for outputting or inputting electrical energy of the battery cell 20. In some embodiments, the end cover 21 may be further provided with a pressure relief mechanism for relieving internal pressure when the internal pressure or temperature of the battery cell 20 reaches a threshold. The end cover 21 may be made of various materials, such as copper, iron, aluminum, stainless steel, an aluminum alloy, and plastic, which is not particularly limited in this embodiment of the present application. In some embodiments, an insulating member may be further arranged on an inner side of the end cover 21 and may be used for isolating an electrical connection component in the case 22 from the end cover 21, thereby reducing the risk of short circuit. By way of example, the insulating member may be made of plastic, rubber, etc.

The case 22 is an assembly for fitting the end cover 21 to form the internal environment of the battery cell 20. The formed internal environment may be used for accommodating the electrode assembly 23, the electrolyte, and other components. The case 22 and the end cover 21 may be separate components, an opening may be formed on the case 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When an interior of the case 22 is required to be encapsulated, the end cover 21 is enabled to cover the case 22. The case 22 may be in various shapes and sizes, such as a cuboid, a cylinder, or a hexagonal prism. Specifically, the shape of the case 22 may be determined according to the specific shape and size of the electrode assembly 23. The case 22 may be made of various materials, such as copper, iron, aluminum, stainless steel, an aluminum alloy, and plastic, which is not particularly limited in this embodiment of the present application.

The electrode assembly 23 is a component in the battery cell 20 where an electrochemical reaction occurs. One or more electrode assemblies 23 may be contained within the case 22. The electrode assembly 23 is mainly formed by winding or stacking a positive electrode plate and a negative electrode plate, and a separator is usually provided between the positive electrode plate and the negative electrode plate. The portions of the positive electrode plate and the negative electrode plate that have active materials constitute a main body part of the electrode assembly, and the portions of the positive electrode plate and the negative electrode plate that do not have active materials each constitute a tab. The positive tab and the negative tab may be both located at one end of the main body part or located at two ends of the main body part, respectively. In the charging and discharging process of a battery, the positive electrode active material and the negative electrode active material react with the electrolyte, and the tabs are connected to the electrode terminals to form a current loop.

According to some embodiments of the present application, the present application provides a battery cell, comprising a negative electrode plate and an electrolyte, wherein the electrolyte comprises a solid electrolyte and a liquid electrolyte. The ratio of the thickness of the fully charged negative electrode plate to the thickness of the uncharged negative electrode plate is x, and the ratio of the mass of the solid electrolyte in the electrolyte to the mass of the electrolyte is y. When $x \leq 20\%$, $0 < y \leq 50\%$. When $20\% < x < 80\%$, $50\% < y < 90\%$. When $x \geq 80\%$, $90\% \leq y \leq 96\%$.

The negative electrode plate comprises a negative electrode current collector and a negative electrode film layer arranged on at least one surface of the negative electrode current collector, wherein the negative electrode film layer comprises a negative electrode active material.

By way of example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector may comprise a high molecular material substrate layer and a metal layer formed on at least one surface of the high molecular material substrate. The composite current collector may be formed by forming a metal material (such as copper, copper alloy, nickel, nickel alloy, titanium, titanium alloy, silver, or silver alloy) on the high molecular material substrate (such as a substrate of polypropylene (PP), polyethylene terephthalate (PET), polybutylene terephthalate (PBT), polystyrene (PS), or polyethylene (PE)).

In some embodiments, a negative electrode active material that is well known in the art for use in a battery may be used as the negative electrode active material. For example, the negative electrode active material may comprise at least one of the following materials: artificial graphite, natural graphite, soft carbon, hard carbon, a silicon-based material, a tin-based material, lithium titanate, etc. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials, and other traditional materials that may be used for the negative electrode active materials of batteries may also be used. One of these negative electrode active materials may be used alone, or two or more of these positive electrode active materials may be used in combination.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally comprises other agents, for example, a thickener (such as sodium carboxymethyl cellulose (CMC-Na)).

In some embodiments, the negative electrode plate may be prepared by dispersing the above components for preparing the negative electrode plate, such as the negative electrode active material, the conductive agent, the binder and any other component, in a solvent (such as deionized water) to form a negative electrode slurry; and coating the negative electrode current collector with the negative electrode slurry, and performing processes such as drying and cold pressing to obtain the negative electrode plate.

The electrolyte serves to conduct ions between the positive electrode plate and the negative electrode plate.

The thickness of the fully charged negative electrode plate is the thickness of the negative electrode plate after the battery cell is fully charged.

The thickness of the uncharged negative electrode plate is the thickness thereof when charging has not been carried out after the negative electrode plate is cold-pressed.

The mass of the electrolyte is the sum of the mass of the solid electrolyte and the mass of the liquid electrolyte.

By way of example, when $x \leq 20\%$, the value of y can be 1%, 2%, 5%, 8%, 10%, 12%, 15%, 18%, 20%, 22%, 25%, 28%, 30%, 32%, 35%, 38%, 40%, 42%, 45%, 48%, or 50%.

When 20% < x < 80%, the value of y can be 51%, 52%, 55%, 58%, 60%, 62%, 65%, 68%, 70%, 72%, 75%, 78%, 80%, 82%, 85%, 88%, or 89%.

When x ≥ 80%, the value of y can be 90%, 91%, 92%, 93%, 94%, 95%, 96%, 97%, 98%, or 99%.

By means of the cooperation of the liquid electrolyte with the solid electrolyte in the battery cell of the present application and the definition of the ratio of the mass of the solid electrolyte to the mass of the electrolyte in the battery cell comprising the negative electrode plate having a varying volume expansion ratio, not only can squeezing-induced leakage of the liquid electrolyte be reduced or avoided, but the electrolyte can also provide a better lithium ion transmission rate, so that the battery cell can balance the cycling performance and capacity performance.

According to some embodiments of the present application, optionally, when x ≤ 20%, 0 < y ≤ 10%. When 20% < x < 80%, 70% ≤ y < 90%. When x ≥ 80%, 90% ≤ y ≤ 93%.

When x ≤ 20%, the volume expansion ratio of the negative electrode plate is relatively low, and 0 < y ≤ 10% enables the battery cell to obtain both a higher number of cycles and a larger battery capacity; when 20% < x < 80% and 70% ≤ y < 90%, the volume expansion ratio of the negative electrode plate is moderate, and 70% ≤ y < 90% enables the battery cell to balance the number of cycles and the battery capacity; and when x ≥ 80%, the volume expansion ratio of the negative electrode plate is relatively large, and 90% ≤ y ≤ 93% enables the battery cell to achieve a higher number of cycles while the battery capacity is maintained.

According to some embodiments of the present application, optionally, the solid electrolyte is a heat-curable electrolyte.

The heat-curable electrolyte can be cured under heating conditions to form a solid electrolyte.

According to some embodiments of the present application, optionally, the curing temperature of the heat-curable electrolyte is 50-110°C.

By way of example, the curing temperature of the heat-curable electrolyte may be 50°C, 55°C, 60°C, 65°C, 70°C, 75°C, 80°C, 85°C, 90°C, 95°C, 100°C, 105°C, or 110°C.

The curing temperature of the heat-curable electrolyte is relatively low and within a safe operating temperature range of the battery cell.

Optionally, the curing temperature of the heat-curable electrolyte is 60-70°C.

According to some embodiments of the present application, optionally, the liquid electrolyte comprises a lithium salt and/or a sodium salt, and the lithium salt comprises any one or more of $LiPF_6$, $LiClO_4$, LiTFSI, LiFSI, LiBOB, LiDFOB, and $LiNO_3$.

Optionally, the molar concentration of the lithium salt is 0.9-1.5 mol/L.

According to some embodiments of the present application, the present application further provides a method for preparing the battery cell of the above embodiment, which comprises: preparing an electrode assembly, placing the electrode assembly into a case, injecting a raw material for forming the solid electrolyte into the case, curing the raw material of the solid electrolyte to form the solid electrolyte, further injecting the liquid electrolyte into the case containing the electrode assembly, and sealing the case.

By firstly injecting the raw material for forming the solid electrolyte into the case containing the electrode assembly, curing the raw material of the solid electrolyte to form a solid electrolyte, and then injecting the liquid electrolyte into the case containing the electrode assembly, the method for preparing the battery cell according to the present application can obtain a mixed electrolyte comprising the solid electrolyte and the liquid electrolyte, that is, the mixing of the solid electrolyte and the liquid electrolyte is achieved by only two liquid injections, which simplifies the preparation process of the battery cell and reduces the process cost of the battery cell.

Specifically, the method for preparing the battery cell of the present application comprises the following steps:

S1: assembling a positive electrode plate, a negative electrode plate, and a separator together, and winding the assembled material into a core to obtain a cell;

S2: placing the cell into a case, so that encapsulation is completed to form an un-injected hard case cell;

S3: injecting a raw material for forming a solid electrolyte into the cell, and leaving an injection port open and unplugged with a sealing pin for curing; and

S4: removing the sealing pin, injecting a liquid electrolyte into the cell, and welding the sealing pin to prepare the battery cell.

According to some embodiments of the present application, optionally, the solid electrolyte is a heat-curable electrolyte, and after the raw material of the heat-curable electrolyte is injected into the case containing the electrode assembly, the raw material of the heat-curable electrolyte is reacted at 50-110°C for 3-24 h to form the solid electrolyte.

For example, the curing time of the heat-curable electrolyte may be 3 h, 5 h, 8 h, 10 h, 12 h, 15 h, 18 h, 20 h, 22 h, or 24 h.

The curing process of the heat-curable electrolyte of the present application is simple and convenient and can form a stable solid electrolyte.

According to some embodiments of the present application, optionally, the raw material of the heat-curable electrolyte comprises the liquid electrolyte, a polymerizable monomer, and an initiator.

Under heating conditions, the polymerizable monomer can be polymerized under the action of the initiator to form a polymer, and the polymer absorbs part of the liquid electrolyte to form a solid electrolyte.

According to some embodiments of the present application, optionally, the mass fraction of the polymerizable monomer in the raw material is 0.5-6.5 wt%.

For example, the mass fraction of the polymerizable monomer in the raw material may be 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, or 6.5 wt%.

When the mass fraction of the polymerizable monomer in the raw material is 0.5-6.5 wt%, the polymerizable monomer can be polymerized under the action of the initiator to form a polymer, and the polymer absorbs part of the liquid electrolyte to form the solid electrolyte, thereby obtaining the electrolyte composed of the liquid electrolyte and the solid electrolyte.

According to some embodiments of the present application, optionally, the mass fraction of the initiator in the raw material is 0.1-0.5 wt%.

For example, the mass fraction of the initiator in the raw material may be 0.1 wt%, 0.2 wt%, 0.3 wt%, 0.4 wt%, or 0.5 wt%.

When the mass fraction of the initiator in the raw material is 0.1-0.5 wt%, the polymerizable monomer can be polymerized under the action of the initiator to form a polymer, and the polymer absorbs part of the liquid electrolyte to form the solid electrolyte, thereby obtaining the electrolyte composed of the liquid electrolyte and the solid electrolyte.

According to some embodiments of the present application, optionally, the polymerizable monomer has an unsaturated double bond.

The polymerizable monomer having the unsaturated double bond can be polymerized under the action of the initiator to form a polymer, and the polymer absorbs part of the liquid electrolyte to form a solid electrolyte.

According to some embodiments of the present application, optionally, the polymerizable monomer comprises any one or more of an ester monomer, a carbonate monomer, a sulfone monomer, an isocyanate monomer, an amide monomer, a nitrile monomer, and a fluorinated monomer.

The above polymerizable monomer can be polymerized under the action of the initiator to form a polymer, and the polymer absorbs part of the liquid electrolyte to form the solid electrolyte.

Optionally, the polymerizable monomer comprises one or two of methyl methacrylate, ethyl methacrylate, propyl methacrylate, butyl methacrylate, dimethylaminoethyl methacrylate, hydroxyethyl methacrylate, polyethylene glycol dimethacrylate, methylene succinic acid, maleic anhydride, acrylamide glycolic acid methyl ester methyl ether, 2-(methacryloyloxy)ethyl isocyanate, N,N'-bisacryloylcystamine, N,N-methylenebisacrylamide, triallyl isocyanurate, and ethylene glycol dimethacrylate.

According to some embodiments of the present application, optionally, the initiator comprises any one or more of azobisisobutyronitrile, azobisisovaleronitrile, azobisisoheptanenitrile, azoisobutylcyanoformamide, azobiscyclohexylcarbonitrile, dimethyl azobisisobutyrate, azobisisobutyramidine hydrochloride, azobisisopropylimidazoline hydrochloride, and azobiscyanovaleric acid.

The above initiator can initiate the polymerization of the polymerizable monomer to form a polymer, and the polymer absorbs part of the liquid electrolyte to form the solid electrolyte.

The battery cell and the preparation method therefor, the battery, and the electrical apparatus of the present application are further described in detail below in conjunction with examples.

Parameters of battery cells of Examples 1 to 15 of the present application and Comparative Examples 1 to 10 are as shown in Table 1.

Table 1 Parameters of battery cells of Examples 1 to 15 and Comparative Examples 1 to 10

| Item | Negative electrode active material | Silicon content of negative electrode (wt%) | x | y |
|---|---|---|---|---|
| Example 1 | Artificial graphite | 0 | 19 | 1 |
| Example 2 | Artificial graphite | 0 | 19 | 10 |
| Example 3 | Artificial graphite | 0 | 19 | 50 |
| Comparative Example 1 | Artificial graphite | 0 | 19 | 55 |
| Comparative Example 2 | Artificial graphite | 0 | 19 | 60 |
| Comparative Example 3 | Artificial graphite - Silicon-oxygen compound | 5 | 28 | 40 |
| Example 4 | Artificial graphite - Silicon-oxygen compound | 5 | 28 | 51 |

(continued)

| Item | Negative electrode active material | Silicon content of negative electrode (wt%) | x | y |
|---|---|---|---|---|
| Example 5 | Artificial graphite - Silicon-oxygen compound | 5 | 28 | 70 |
| Example 6 | Artificial graphite - Silicon-oxygen compound | 5 | 28 | 89 |
| Comparative Example 4 | Artificial graphite - Silicon-oxygen compound | 5 | 28 | 95 |
| Comparative Example 5 | Artificial graphite - Silicon-oxygen compound | 30 | 68 | 40 |
| Example 7 | Artificial graphite - Silicon-oxygen compound | 30 | 68 | 51 |
| Example 8 | Artificial graphite - Silicon-oxygen compound | 30 | 68 | 70 |
| Example 9 | Artificial graphite - Silicon-oxygen compound | 30 | 68 | 89 |
| Comparative Example 6 | Artificial graphite - Silicon-oxygen compound | 30 | 68 | 95 |
| Comparative Example 7 | Artificial graphite - Silicon-oxygen compound | 55 | 80 | 80 |
| Comparative Example 8 | Artificial graphite - Silicon-oxygen compound | 55 | 80 | 85 |
| Example 10 | Artificial graphite - Silicon-oxygen compound | 55 | 80 | 90 |
| Example 11 | Artificial graphite - Silicon-oxygen compound | 55 | 80 | 93 |
| Example 12 | Artificial graphite - Silicon-oxygen compound | 55 | 80 | 96 |
| Comparative Example 9 | Artificial graphite - Silicon-oxygen compound | 60 | 90 | 80 |
| Comparative Example 10 | Artificial graphite - Silicon-oxygen compound | 60 | 90 | 85 |
| Example 13 | Artificial graphite - Silicon-oxygen compound | 60 | 90 | 90 |
| Example 14 | Artificial graphite - Silicon-oxygen compound | 60 | 90 | 93 |
| Example 15 | Artificial graphite - Silicon-oxygen compound | 60 | 90 | 96 |

The silicon content of a negative electrode is the mass percentage of a silicon-based material in a negative electrode active material layer. For example, in Example 7, the silicon content of the negative electrode = the mass of a silicon-oxygen compound / (the mass of artificial graphite + the mass of the silicon-oxygen compound).

A method used for preparing the battery cells of Examples 1-15 and Comparative Examples 1-10 was as follows:

S1: Preparation of liquid electrolyte

LiFSI was dissolved in a solvent of ethylene carbonate (EC), ethyl methyl carbonate (EMC), and diethyl carbonate (DEC) at a volume ratio of 1:1:1 to formulate a liquid electrolyte with a concentration of 1 mol/L, and the liquid electrolyte was divided into two parts.

S2: Preparation of solid electrolyte

Methyl methacrylate as a polymerizable monomer and azobisisobutyronitrile as an initiator were dissolved in one part of liquid electrolyte at mass fractions of 5wt% and 0.2wt%, respectively, and mechanically stirred at 25°C for 1 h to obtain a raw material for forming the solid electrolyte.

S3: Preparation of positive electrode plate

A nickel-cobalt-manganese (NCM) ternary material, carbon black as a conductive agent, and polyvinylidene fluoride (PVDF) as a binder were mixed at a mass ratio of 97:1:2, N-methylpyrrolidone was added, and these materials were mixed and stirred for 0.5-6 h to obtain a positive electrode slurry; subsequently, the positive electrode slurry was uniformly applied to a positive electrode current collector, and the positive electrode current collector is dried, cold-pressed, and slitted to obtain the positive electrode plate.

S4: Preparation of negative electrode plate

A negative electrode active material, carbon black as a conductive agent, styrene butadiene rubber (SBR) as a binder, and sodium hydroxymethylcellulose (CMC) as a thickener were to deionized water at a weight ratio of 97:0.5:1.25:1.25, mixed, and stirred for 3 h to obtain a negative electrode slurry. The negative electrode slurry was uniformly applied to a negative electrode current collector, and the negative electrode current collector was dried, cold-pressed, and slitted to obtain the negative electrode plate.

S5: Selection of separator

A polypropylene film was used as the separator.

S6: Preparation of battery cell

According to a conventional lithium battery assembly process, the separator was placed between the positive electrode plate and the negative electrode plate and wound into a core to obtain a bare cell, and the bare cell was placed in an aluminum case to obtain an un-injected hard case battery. The cell was dried and then subjected to a first liquid injection by injecting the raw material for forming the solid electrolyte. After full infiltration with the electrolyte, formation was carried out, and after formation, the cell was placed in a constant temperature forced air oven at 70°C and heated for 12 h to form a solid electrolyte. A second liquid injection was carried out by injection with the other part of liquid electrolyte, and after welding with a sealing pin, the cell was aged at a high temperature to obtain the battery cell.

Test Example 1

The cycling performance and mass energy density of the battery cells of Examples 1 to 15 and Comparative Examples 1 to 10 were tested, respectively, and were as shown in Table 2.
The number of cycles at 80% SOH was detected by the following method:
The battery cell was placed in a constant temperature environment, and a program was set as follows: the battery cell was left to stand for 10 min and charged at a current of 0.33 C to 4.25 V and then at a constant voltage until the current dropped to 0.05 C; and the procedure was proceeded to the next step in which the battery cell was left to stand for 10 min and then discharged at a current of 0.33 C to 2.5 V, thus completing one charge-discharge cycle. The discharge capacity at this cycle was denoted as a first-cycle discharge capacity. The battery cell was tested for a certain number of charge-discharge cycles according to the above method until the discharge capacity of the battery cell was 80% of the discharge capacity of the first cycle, and the number of charge-discharge cycles of the battery cell was recorded.
The mass energy density was measured by the following method:
At 25°C, the battery cell was charged at a standard of 0.33 C to 4.25 V and at a constant voltage of 4.25 V to 0.05 C, and after being left to stand for 10 min, the battery cell was discharged at 0.33 C to 2.5 V. The discharge capacity thereof was recorded, and the mass energy density was calculated during discharging:

$$\text{Mass energy density (Wh/kg)} = \text{discharge capacity (Wh)} / \text{mass of the battery cell (kg)}.$$

Table 2 Performance of battery cells of Examples 1 to 15 and Comparative Examples 1 to 10

| Item | Number of cycles at 80% SOH / cls | Mass energy density (Wh/kg) |
|---|---|---|
| Example 1 | 2500 | 240 |
| Example 2 | 2600 | 238 |
| Example 3 | 2620 | 230 |
| Comparative Example 1 | 1200 | 230 |
| Comparative Example 2 | 900 | 225 |
| Comparative Example 3 | 1550 | 260 |
| Example 4 | 1700 | 260 |
| Example 5 | 1720 | 256 |
| Example 6 | 1750 | 255 |
| Comparative Example 4 | 1750 | 240 |
| Comparative Example 5 | 1050 | 303 |

(continued)

| Item | Number of cycles at 80% SOH / cls | Mass energy density (Wh/kg) |
|---|---|---|
| Example 7 | 1200 | 302 |
| Example 8 | 1250 | 296 |
| Example 9 | 1260 | 296 |
| Comparative Example 6 | 1250 | 280 |
| Comparative Example 7 | 700 | 330 |
| Comparative Example 8 | 700 | 328 |
| Example 10 | 820 | 325 |
| Example 11 | 825 | 326 |
| Example 12 | 780 | 325 |
| Comparative Example 9 | 600 | 342 |
| Comparative Example 10 | 620 | 340 |
| Example 13 | 730 | 335 |
| Example 14 | 720 | 334 |
| Example 15 | 700 | 332 |

As can be seen from Examples 1 to 3, the ratio x of the thickness of the fully charged negative electrode plate to the thickness of the uncharged negative electrode plate was 19, the negative electrode active material of the negative electrode plate was graphite, and the silicon content of the negative electrode active material was 0. When the ratio y of the mass of the solid electrolyte in the electrolyte to the mass of the electrolyte satisfied $0 < y \leq 50\%$, the number of cycles of the battery cell at 80% SOH was 2500-2620 cls, and the mass energy density was 230-240 Wh/kg. As can be seen from the comparison of Examples 1 to 3 and Comparative Examples 1 and 2, when the ratio y of the mass of the solid electrolyte in the electrolyte to the mass of the electrolyte satisfied $y > 50\%$, the number of cycles of the battery cell at 80% SOH was only 900-1200 cls, that is, the battery cell plummeted, and when the volume expansion ratio of the negative electrode plate was relatively low, there was no need for excessive solid electrolyte for liquid-locking. Excessive solid electrolyte would only increase polarization.

As can be seen from Examples 4 to 6, the ratio x of the thickness of the fully charged negative electrode plate to the thickness of the uncharged negative electrode plate was 28, the negative electrode active material of the negative electrode plate was a mixture of graphite and a silicon-based material, and the silicon content of the negative electrode active material was 5 wt%. When the ratio y of the mass of the solid electrolyte in the electrolyte to the mass of the electrolyte satisfies $50\% < y < 90\%$, the number of cycles of the battery cell at 80% SOH was 1700-1750 cls, and the mass energy density was 255-260Wh/kg. As can be seen from the comparison of Examples 4 to 6 and Comparative Example 3, when the ratio y of the mass of the solid electrolyte in the electrolyte to the mass of the electrolyte satisfied $y \leq 50\%$, the number of cycles of the battery cell at 80% SOH was only 1550 cls, that is, the amount of the solid electrolyte was relatively small, and the volume expansion of the negative electrode plate caused more liquid electrolyte to be squeezed out, posing a risk of plummeting during cycling. As can be seen from the comparison of Examples 4 to 6 and Comparative Example 4, when the ratio y of the mass of the solid electrolyte in the electrolyte to the mass of the electrolyte satisfied $y \geq 90\%$, the mass energy density of the battery cell was only 240 Wh/kg. Excessive solid electrolyte would affect the lithium ion transmission rate.

As can be seen from Examples 7 to 9, the ratio x of the thickness of the fully charged negative electrode plate to the thickness of the uncharged negative electrode plate was 68, the negative electrode active material of the negative electrode plate was a mixture of graphite and a silicon-based material, and the silicon content of the negative electrode active material was 30 wt%. When the ratio y of the mass of the solid electrolyte in the electrolyte to the mass of the electrolyte satisfied $50\% < y \leq 90\%$, the number of cycles of the battery cell at 80% SOH was 1200-1260 cls, and the mass energy density was 296-302 Wh/kg. As can be seen from the comparison of Examples 7 to 9 and Comparative Example 5, when the ratio y of the mass of the solid electrolyte in the electrolyte to the mass of the electrolyte satisfied $y \leq 50\%$, the number of cycles of the battery cell at 80% SOH was only 1050 cls, that is, the amount of the solid electrolyte was relatively small, and the volume expansion of the negative electrode plate caused more liquid electrolyte to be squeezed out, posing a risk of plummeting during cycling. As can be seen from the comparison of Examples 7 to 9 and Comparative Example 6, when the ratio y of the mass of the solid electrolyte in the electrolyte to the mass of the electrolyte satisfied $y \geq 90\%$, the

mass energy density of the battery cell was only 280 Wh/kg. Excessive solid electrolyte would affect the lithium ion transmission rate.

As can be seen from Examples 10 to 12, the ratio x of the thickness of the fully charged negative electrode plate to the thickness of the uncharged negative electrode plate was 80, the negative electrode active material of the negative electrode plate was a mixture of graphite and a silicon-based material, and the silicon content of the negative electrode active material was 55 wt%. When the ratio y of the mass of the solid electrolyte in the electrolyte to the mass of the electrolyte satisfied $90 \leq y \leq 96\%$, the number of cycles of the battery cell at 80% SOH was 780-820 cls, and the mass energy density was 324-326 Wh/kg. As can be seen from the comparison of Examples 10 to 12 and Comparative Examples 7 to 8, when the ratio y of the mass of the solid electrolyte in the electrolyte to the mass of the electrolyte satisfied $y < 90\%$, the number of cycles of the battery cell at 80% SOH was only 700 cls, that is, the amount of the solid electrolyte was relatively small, and the volume expansion of the negative electrode plate caused more liquid electrolyte to be squeezed out.

As can be seen from Examples 13 to 15, the ratio x of the thickness of the fully charged negative electrode plate to the thickness of the uncharged negative electrode plate was 90, the negative electrode active material of the negative electrode plate was a mixture of graphite and a silicon-based material, and the silicon content of the negative electrode active material was 60 wt%. When the ratio y of the mass of the solid electrolyte in the electrolyte to the mass of the electrolyte satisfied $90 \leq y \leq 96\%$, the number of cycles of the battery cell at 80% SOH was 700-730 cls, and the mass energy density was 332-335 Wh/kg. As can be seen from the comparison of Examples 13 to 15 and Comparative Examples 9 and 10, when the ratio y of the mass of the solid electrolyte in the electrolyte to the mass of the electrolyte satisfied $y < 90\%$, the number of cycles of the battery cell at 80% SOH was only 600-620 cls, that is, the amount of the solid electrolyte was relatively small, and the volume expansion of the negative electrode plate caused more liquid electrolyte to be squeezed out.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising a negative electrode plate and an electrolyte, wherein the electrolyte comprises a solid electrolyte and a liquid electrolyte;

   the ratio of the thickness of the fully charged negative electrode plate to the thickness of the uncharged negative electrode plate is x, and the ratio of the mass of the solid electrolyte in the electrolyte to the mass of the electrolyte is y;
   when $x \leq 20\%$, $0 < y \leq 50\%$;
   when $20\% < x < 80\%$, $50\% < y < 90\%$; and
   when $x \geq 80\%$, $90\% \leq y \leq 96\%$.

2. The battery cell according to claim 1, wherein when $x \leq 20\%$, $0 < y \leq 10\%$;

   when $20\% < x < 80\%$, $70\% \leq y < 90\%$; and
   when $x \geq 80\%$, $90\% \leq y \leq 93\%$.

3. The battery cell according to claim 1 or 2, wherein the solid electrolyte is a heat-curable electrolyte.

4. The battery cell according to claim 3, wherein the curing temperature of the heat-curable electrolyte is 50-110°C.

5. The battery cell according to any one of claims 1 to 4, wherein the liquid electrolyte comprises a lithium salt and/or a sodium salt, and the lithium salt comprises any one or more of $LiPF_6$, $LiClO_4$, LiTFSI, LiFSI, LiBOB, LiDFOB, and $LiNO_3$.

6. A method for preparing the battery cell according to any one of claims 1 to 5, wherein the method for preparing the battery cell comprises:

preparing an electrode assembly; and
placing the electrode assembly into a case, injecting a raw material for forming the solid electrolyte into the case, curing the raw material of the solid electrolyte to form the solid electrolyte, further injecting the liquid electrolyte into the case containing the electrode assembly, and sealing the case.

7. The method for preparing the battery cell according to claim 6, wherein the solid electrolyte is a heat-curable electrolyte, and after the raw material of the heat-curable electrolyte is injected into the case containing the electrode assembly, the raw material of the heat-curable electrolyte is reacted at 50-110°C for 3-24 h to form the solid electrolyte.

8. The method for preparing the battery cell according to claim 7, wherein the raw material of the heat-curable electrolyte comprises the liquid electrolyte, a polymerizable monomer, and an initiator.

9. The method for preparing the battery cell according to claim 8, wherein in the raw material, the mass fraction of the polymerizable monomer is 0.5-6.5 wt%.

10. The method for preparing the battery cell according to claim 8 or 9, wherein in the raw material, the mass fraction of the initiator is 0.1-0.5 wt%.

11. The method for preparing the battery cell according to any one of claims 8 to 10, wherein the polymerizable monomer has an unsaturated double bond.

12. The method for preparing the battery cell according to any one of claims 8 to 11, wherein the polymerizable monomer comprises any one or more of an ester monomer, a carbonate monomer, a sulfone monomer, an isocyanate monomer, an amide monomer, a nitrile monomer, and a fluorinated monomer.

13. The battery cell according to any one of claims 8 to 12, wherein the initiator comprises any one or more of azobisisobutyronitrile, azobisisovaleronitrile, azobisisoheptanenitrile, azoisobutylcyanoformamide, azobiscyclohexylcarbonitrile, dimethyl azobisisobutyrate, azobisisobutyramidine hydrochloride, azobisisopropylimidazoline hydrochloride, and azobiscyanovaleric acid.

14. A battery, comprising the battery cell according to any one of claims 1 to 5.

15. An electrical apparatus, comprising the battery cell according to claims 1 to 5 or the battery according to claim 14, wherein the battery cell or the battery is used for providing electrical energy.

1000

## FIG. 1

## FIG. 2

**FIG. 3**

## INTERNATIONAL SEARCH REPORT

| | International application No. |
|---|---|
| | **PCT/CN2023/095339** |

**A. CLASSIFICATION OF SUBJECT MATTER**

H01M10/0565(2010.01)i; H01M10/0525(2010.01)i; H01M10/058(2010.01)i; H01M4/62(2006.01)i; H01M4/36(2006.01)i

According to International Patent Classification (IPC) or to both national classification and IPC

**B. FIELDS SEARCHED**

Minimum documentation searched (classification system followed by classification symbols)

IPC: H01M10, H01M4

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 充电?前, 充满, 电解质, 负极, 固化, 厚, 厚度, 极片, 满充, 满电, 膨胀, 未充电, negative electrode, solidified electrolyte, liquid electrolyte, expansion ratio, piece, thickness

**C. DOCUMENTS CONSIDERED TO BE RELEVANT**

| Category* | Citation of document, with indication, where appropriate, of the relevant passages | Relevant to claim No. |
|---|---|---|
| Y | CN 112786848 A (DO-FLUORIDE CHEMICALS CO., LTD.) 11 May 2021 (2021-05-11) description, paragraphs 4-22 and 57-70 | 1-15 |
| Y | CN 116130637 A (SICHUAN JINHUINENG NEW MATERIAL CO., LTD.) 16 May 2023 (2023-05-16) description, paragraphs 4-26 and 84-93, and figures 1-3 | 1-15 |
| Y | CN 114497723 A (ZHUHAI COSMX BATTERY CO., LTD.) 13 May 2022 (2022-05-13) description, paragraphs 4-38 and 42-145 | 1-15 |
| A | CN 111435736 A (SVOLT ENERGY TECHNOLOGY CO., LTD.) 21 July 2020 (2020-07-21) entire document | 1-15 |
| A | CN 114156432 A (HUIZHOU EVE ENERGY CO., LTD.) 08 March 2022 (2022-03-08) entire document | 1-15 |
| A | CN 115101711 A (JIANGSU ZENERGY BATTERY TECHNOLOGIES CO., LTD.) 23 September 2022 (2022-09-23) entire document | 1-15 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **30 January 2024** | **31 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095339**

| Patent document cited in search report | | | Publication date (day/month/year) | Patent family member(s) | | | Publication date (day/month/year) |
|---|---|---|---|---|---|---|---|
| CN | 112786848 | A | 11 May 2021 | None | | | |
| CN | 116130637 | A | 16 May 2023 | None | | | |
| CN | 114497723 | A | 13 May 2022 | CN | 114497723 | B | 16 January 2024 |
| CN | 111435736 | A | 21 July 2020 | CN | 111435736 | B | 27 May 2022 |
| CN | 114156432 | A | 08 March 2022 | None | | | |
| CN | 115101711 | A | 23 September 2022 | None | | | |

Form PCT/ISA/210 (patent family annex) (July 2022)